# EUROPEAN PATENT SPECIFICATION

(11) **EP 2 714 835 B1**
(45) Date of publication and mention of the grant of the patent: **17.06.2015**
(21) Application number: 12725194.0
(22) Date of filing: 17.05.2012
(51) Int. Cl.: C09K 8/28, C09K 8/36, C09K 8/34

(54) **METHODS TO MODIFY DRILLING FLUIDS TO IMPROVE LOST CIRCULATION CONTROL**
VERFAHREN ZUR MODIFIZIERUNG VON BOHRFLÜSSIGKEITEN ZUR VERBESSERUNG DER ZIRKULATIONSVERLUSTSTEUERUNG
PROCÉDÉS POUR MODIFIER DES FLUIDES DE FORAGE POUR AMÉLIORER LA LIMITATION DE LA PERTE DE CIRCULATION

(30) Priority: 01.06.2011 US 201113150897
(43) Date of publication of application: 09.04.2014
(73) Proprietor: Halliburton Energy Services, Inc., Houston, TX 77072 (US)
(72) Inventor: KULKARNI, Sandeep D., Maharashtra 411001 (IN); SAVARI, Sharath, Maharashtra 4111001 (IN); KUMAR, Arunesh, Maharashtra 411001 (IN); MAGHRABI, Shadaab S., Maharashtra 4111001 (IN); JAMISON, Dale E., Humble, TX 77346 (US); MURPHY, Robert J., Kingwood, TX 77339 (US)
(74) Representative: Hoffmann Eitle
(86) International application number: PCT/US2012/038236
(87) International publication number: WO 2012/166372

(56) References cited:
- US-A- 4 012 329
- US-A- 4 561 985
- US-A1- 2005 233 911
- US-A1- 2010 137 168
- DAVID F. JAMES: "Boger Fluids", ANNU. REV. FLUID MECH., vol. 41, 2009, - 2009, pages 129-142, XP002679838,

## Description

### BACKGROUND

The present invention relates to methods involving treatment (e.g., drilling) fluids that have a desired degree of lost circulation control in a subterranean operation.

A drilling fluid or mud is a specially designed fluid that is circulated through a wellbore as the wellbore is being drilled to facilitate the drilling operation. The various functions of a drilling fluid include removing drill cuttings from the wellbore, cooling and lubricating the drill bit, aiding in support of the drill pipe and drill bit and providing a hydrostatic head to maintain the integrity of the wellbore walls, and preventing well blowouts. Specific drilling fluid systems, which can be oil-based or aqueous-based, are selected to optimize a drilling operation in accordance with the characteristics of a particular geological formation.

Oil-based muds are normally used to drill swelling or sloughing shales, salt, gypsum, anhydrite or other evaporite formations; hydrogen sulfide-containing formations; and high temperature (e.g., greater than about 149°C (300°F)) holes, but may be used in other holes penetrating a subterranean formation as well. Oil-based muds are commonly used as treatment fluids for drilling, stimulation, sand control, and completion operations. As used herein, the term "treatment," or "treating," refers to any subterranean operation that uses a fluid in conjunction with a desired function and/or for a desired purpose. The term "treatment," or "treating," does not imply any particular action by the fluid.

Lost circulation is a common occurrence in drilling operations. In particular, the fluids may enter the subterranean formation via depleted zones, zones of relatively low pressure, lost circulation zones having naturally occurring fractures, weak zones having fracture gradients exceeded by the hydrostatic pressure of the drilling fluid, and so forth. Lost circulation may be a result of treatment fluid being lost to voids within the wellbore and/or the subterranean formation. As a result, the service provided by such fluid is more difficult to achieve. For example, a drilling fluid may be lost to the formation, resulting in the circulation of the fluid in the wellbore being too low to allow for further drilling of the wellbore. In addition, loss of fluids, such as oil-based muds may be quite expensive. Furthermore, the drilling operations may need to be interrupted until the circulation loss problem is solved, which may result in expensive idle rig time. Therefore, a treatment fluid for lost circulation control may be used. By way of nonlimiting example, voids may include pores, vugs, fissures, cracks, and fractures that may be natural or man-made. Several methods may be available for lost circulation control including bridging fractures, providing fluid loss control, sealing surfaces for fluid diversion, or plugging voids. In each method to control lost circulation, the rheological properties of the treatment fluid may be important to the efficacy of treatment. Lost circulation control fluids contain additives that at least partially plug voids, e.g., pores, cracks, or fractures, in a zone causing loss of circulation. These additives are typically called lost circulation materials.

A multitude of lost circulation materials and techniques of placing the lost circulation materials in the loss zone have been developed which demonstrate superior lost circulation control when implemented in aqueous-based fluids versus oil-based fluids. When aqueous-based fluids are used in conjunction with oil-based treatment fluids, significant time and care is taken to prepare the wellbore and subterranean formation for the introduction of an aqueous-based fluid and then for the transition back to the oil-based treatment fluid.

In formations where oil-based treatment fluids are used, a need exists to develop methods that use oil-based fluids for blocking the flow of fluid through pathways such as fractures, lost circulation zones in the subterranean formation, voids or cracks in the cement column and the casing, and so forth.

US-A-2010/0137168 discloses a nanoemulsion for use in well operations such as drilling, the nanoemulsion comprising a continuous phase, a discontinuous phase having a mean droplet size of less than 1000 nm, a surfactant, and a solid weighting agent. One of the continuous phase and the discontinuous phase is a polar phase and the other phase is non-polar.

US-A-2005/0233911 discloses a gelled fluid comprising a non-aqueous base oil, a gelling agent, an activator, and a gel-enhancing surfactant. The fluid is employed for treating a subterranean formation (e.g., during drilling).

US-B-4,012,329 teaches a drilling fluid which is an oil-external microemulsion comprising water, a hydrocarbon, sodium petroleum sulfonate, bentonite, and optionally a co-surfactant.

### SUMMARY OF THE INVENTION

The present invention relates to methods involving treatment fluids that have a desired degree of lost circulation control in a subterranean operation.

A first aspect of the present invention is a method comprising the steps of:
providing a drilling fluid comprising a lost circulation material and a base drilling fluid; and
drilling a portion of a wellbore in a subterranean formation using the drilling fluid;
wherein the base drilling fluid comprises an oleaginous continuous phase and one or more polar organic compounds selected from a thiol, a sulfoxide, pyrrole, pyridine and furan; and
wherein the base drilling fluid has an absolute first normal stress difference (|N₁|) greater than 100 Pa, N₁ being measured by rotational rheometry using a parallel plate geometry at 25°C, 1 atm and a plate gap of 1 mm, and the |N₁| value of greater than 100 Pa applying to shear rates greater than 5 s⁻¹.

Another aspect of the present invention is a method comprising the steps of:
introducing a treatment fluid comprising a lost circulation material and a base treatment fluid into a wellbore penetrating a subterranean formation; and
allowing the lost circulation material to fill a void in the subterranean formation, thereby reducing the flow of the treatment fluid or a subsequent fluid into at least a portion of the subterranean formation neighboring the void;
wherein the base treatment fluid comprises an oleaginous continuous phase and one or more polar organic compounds selected from a thiol, a sulfoxide, pyrrole, pyridine and furan; and
wherein the base treatment fluid has a |N₁| value greater than 100 Pa, N₁ being measured by the method defined above for the first aspect of the invention.

A further aspect of the invention is a method comprising the steps of:
providing a base drilling fluid comprising an oleaginous continuous phase; and
adding one or more polar organic compounds to the base drilling fluid in a concentration sufficient to increase the |N₁| value of the base drilling fluid to greater than 100 Pa, thereby forming a drilling fluid;
wherein the polar organic compound(s) is/are selected from a thiol, a sulfoxide, pyrrole, pyridine and furan; and
wherein N₁ is measured using the method defined above for the first aspect of the invention.

The features and advantages of the present invention will be readily apparent to those skilled in the art upon a reading of the description of the preferred embodiments that follows.

### BRIEF DESCRIPTION OF THE DRAWINGS

Figure 1 is a plot of first normal stress difference (N₁) versus shear rate for three base drilling fluids.
Figure 2 is a plot of N₁ versus shear rate for a base drilling fluid with polar organic molecules added at various concentrations.
Figure 3 is a schematic of the Tapered Slot apparatus used in the tests described herein.

### DETAILED DESCRIPTION

The present invention provides methods for preparing and using oil-based treatment (e.g., drilling) fluids that have similar advantageous features as aqueous-based fluids without the disadvantages of typical oil-based fluids in terms of implementation with respect to lost circulation time and cost. According to the methods of the present invention, this result may be achieved through the addition of a polar organic solvent, namely a thiol, a sulfoxide, pyrrole, pyridine or furan, to the oleaginous base fluid in a desired amount to achieve a first normal stress difference of a magnitude greater than 100 Pa. By increasing the magnitude of the first normal stress difference, lost circulation materials may have increased efficacy even to a point that allows oil-based fluids to rival the efficacy of aqueous-based fluids. The methods provided herein allow for the determination of optimal concentrations of a polar organic solvent to add to an oil-based fluid in order to achieve effective lost circulation control. Accordingly, the present invention provides for easy insertion of a lost circulation control treatment in oil-based operations, thereby reducing idle time and cost. Additionally, the present invention provides methods of lost circulation control that can be implemented in subterranean formations that are not conducive to aqueous-based fluids because of undesirable interactions such as shale swelling or sloughing, salt, gypsum, anhydrite, other evaporite formations, and the like; hydrogen sulfide-containing formations; and high temperature (e.g., greater than about 149°C (300°F)) holes.

According to the methods of the present invention, the flow of a fluid in a void may be classified as a complex extensional flow where the extensional flow viscosity depends on the first normal stress difference (**N₁**). The first normal stress difference is defined as **N₁** = τₓₓ - τ_{yy} where τₓₓ and τ_{yy} are normal stresses of the material in velocity and velocity-gradient directions, respectively. The magnitude of **N₁** is a measure of the degree of fluid visco-elasticity which for a visco-inelastic fluid is about 0. As used herein, the magnitude of **N₁** is the absolute value of **N₁** and may be expressed as |**N₁**|.

The first normal stress difference (**N₁**) may be measured by methods known to one skilled in the art. **N₁** is measured via rotational rheometry using a parallel plate geometry. The measurements are conducted at 25°C and atmospheric pressure with the gap between the plates including a gap set at about 1 mm. An amount of base drilling fluid may be placed in the gap which is then subjected to a shear rate ramp including from 0.1 s⁻¹ to 50 s⁻¹. A plurality of data points (shear stress and **N₁** values) may be collected at selected shear rates. When **N₁** is measured with a parallel plate geometry of an advanced rheometer, the negative value of **N₁** implies that the rheometer plates are pulled together, as is the case in some examples provided herein.

Treatment fluids suitable for lost circulation control comprise a base treatment fluid with a |**N₁**| greater than 100 Pa when measured at a shear rate greater than 5 s⁻¹ on the parallel plate geometry of an advanced rheometer.

In some embodiments, a treatment fluid employed in the present invention may comprise a lost circulation material and a base treatment fluid, wherein the base treatment fluid contains an oleaginous continuous phase and one or more polar organic compounds selected from a thiol, a sulfoxide, pyrrole, pyridine and furan. The polar organic compound(s) is present in the base treatment fluid such that |**N₁**| of the base treatment fluid is greater than 100 Pa.

Without being bound by theory or mechanism, it is believed that the polar organic compound(s) added to the base treatment fluid may provide for at least one of the following: (1) an increase in the base treatment fluid elasticity, (2) a decrease in the polarity difference between an internal and an external phase of an emulsified base treatment fluid, (3) a synergistic effect between other components in the base treatment fluid, (4) a change in lubricity of the base treatment fluid, and/or (5) a change in how lost circulation materials in the treatment fluid interact with each other and with the subterranean formation.

A suitable oleaginous continuous phase for use in the present invention includes any oleaginous continuous phase fluid suitable for use in subterranean operations. By way of nonlimiting example, an oleaginous continuous phase may include an alkane, an olefin, an aromatic organic compound, a cyclic alkane, a paraffin, a diesel fluid, a mineral oil, a desulfurized hydrogenated kerosene, and any combination thereof. In some embodiments, the base treatment fluid may include an invert emulsion with an oleaginous continuous phase and an aqueous discontinuous phase. Suitable invert emulsions may have an oil-to-water ratio from a lower limit of greater than 50:50, 55:45, 60:40, 65:35, 70:30, 75:25, or 80:20 to an upper limit of less than 100:0, 95:5, 90:10, 85:15, 80:20, 75:25, 70:30, or 65:35 by volume in the base treatment fluid, where the amount may range from any lower limit to any upper limit and encompass any subset between the upper and lower limits. Some of the lower limits listed above are greater than some of the listed upper limits. One skilled in the art will recognize that the selected subset will require the selection of an upper limit in excess of the selected lower limit.

In some embodiments, the base treatment fluid may comprise multiple polar organic compounds selected from a thiol, a sulfoxide, pyrrole, pyridine and furan.

The polar organic compound(s) may be added to the base treatment fluid in a sufficient concentration such that |**N₁**| of the base treatment fluid is greater than 100 Pa. In some embodiments, the polar organic compound(s) is/are present in the base treatment fluid in an amount from a lower limit of greater than 0.01%, 0.1%, 0.5%, 1%, 5%, or 10% to an upper limit of less than 100%, 90%, 75%, 50%, 25%, 20%, 15%, 10%, 5%, 1%, 0.5%, or 0.1% by volume of the base treatment fluid, where the amount may range from any lower limit to any upper limit and encompass any subset between the upper and lower limits. Some of the lower limits listed above are greater than some of the listed upper limits. One skilled in the art will recognize that the selected subset will require the selection of an upper limit in excess of the selected lower limit.

In some embodiments, the treatment fluid may contain a lost circulation material and a base treatment fluid. A lost circulation material for use in the present invention may be any known lost circulation material, bridging agent, fluid loss control agent, diverting agent, or plugging agent suitable for use in a subterranean formation. The lost circulation material may be natural or synthetic, degradable or nondegradable, particles or fibers, and mixtures thereof. It should be understood that the term "particulate" or "particle," as used in this disclosure, includes all known shapes of materials, including substantially spherical materials, fibrous materials, high-to-low aspect ratio materials, polygonal materials (such as cubic materials), and mixtures thereof.

Suitable lost circulation materials include, but are not limited to, sand, shale, bauxite, ceramic materials, glass materials, metal pellets, high strength synthetic fibers, cellulose flakes, wood, resins, polymer materials (crosslinked or otherwise), polytetrafluoroethylene materials, nut shell pieces, cured resinous particulates comprising nut shell pieces, seed shell pieces, cured resinous particulates comprising seed shell pieces, fruit pit pieces, cured resinous particulates comprising fruit pit pieces, composite particulates, and any combination thereof. Suitable composite particulates may comprise a binder and a filler material wherein suitable filler materials include silica, alumina, fumed carbon, carbon black, graphite, mica, titanium dioxide, meta-silicate, calcium silicate, kaolin, talc, zirconia, boron, fly ash, hollow glass microspheres, solid glass, and any combination thereof.

In some embodiments, a lost circulation material may be degradable. Nonlimiting examples of suitable degradable materials that may be used in conjunction with the present invention include, but are not limited to, degradable polymers (crosslinked or otherwise), dehydrated compounds, and/or mixtures of the two. In choosing the appropriate degradable material, one should consider the degradation products that will result. As for degradable polymers, a polymer is considered to be "degradable" herein if the degradation is due to, *inter alia,* chemical and/or radical process such as hydrolysis, oxidation, enzymatic degradation, or UV radiation. Suitable examples of degradable polymers for a lost circulation material for use in the present invention that may be used include, but are not limited to, those described in the publication of Advances in Polymer Science, vol. 157 entitled "Degradable Aliphatic Polyesters" edited by A. C. Albertsson. Polymers may be homopolymers, random, linear, crosslinked, block, graft, and star- and hyper-branched. Such suitable polymers may be prepared by polycondensation reactions, ring-opening polymerizations, free radical polymerizations, anionic polymerizations, carbocationic polymerizations, and coordinative ring-opening polymerization, and any other suitable process. Specific examples of suitable polymers include polysaccharides such as dextran or cellulose; chitin; chitosan; proteins; orthoesters; aliphatic polyesters; poly(lactide); poly(glycolide); poly(ε-caprolactone); poly(hydroxybutyrate); poly(anhydrides); aliphatic polycarbonates; poly(orthoesters); poly(amino acids); poly(ethylene oxide); and polyphosphazenes. Of these suitable polymers, aliphatic polyesters and polyanhydrides are preferred.

Dehydrated compounds may be used in accordance with the present invention as a degradable solid particulate. A dehydrated compound is suitable for use in the present invention if it will degrade over time as it is rehydrated. For example, a particulate solid anhydrous borate material that degrades over time may be suitable. Specific examples of particulate solid anhydrous borate materials that may be used include, but are not limited to, anhydrous sodium tetraborate (also known as anhydrous borax) and anhydrous boric acid. Certain degradable materials may also be suitable as compositions of a solid degradable particulate for use in the present invention. One example of a suitable blend of materials is a mixture of poly(lactic acid) and sodium borate where the mixing of an acid and base could result in a neutral solution where this is desirable. Another example would include a blend of poly(lactic acid) and boric oxide, a blend of calcium carbonate and poly(lactic) acid, a blend of magnesium oxide and poly(lactic) acid, and the like. In certain preferred embodiments, the degradable material is calcium carbonate plus poly(lactic) acid. Where a mixture including poly(lactic) acid is used, in certain preferred embodiments the poly(lactic) acid is present in the mixture in a stoichiometric amount, e.g., where a mixture of calcium carbonate and poly(lactic) acid is used, the mixture comprises two poly(lactic) acid units for each calcium carbonate unit. Other blends that undergo an irreversible degradation may also be suitable, if the products of the degradation do not undesirably interfere with either the conductivity of the filter cake or with the production of any of the fluids from the subterranean formation.

In some embodiments, a lost circulation material may be present in a treatment fluid in an amount from a lower limit of greater than 0.029 kg/m³ (0.01 pounds per barrel (PPB)), 0.14 kg/m³ (0.05 PPB), 0.29 kg/m³ (0.1 PPB), 1.43 kg/m³ (0.5 PPB), 2.85 kg/m³ (1 PPB), 8.55 kg/m³ (3 PPB), 14.25 kg/m³ (5 PPB), or 28.5 kg/m³ (10 PPB) to an upper limit of less than 427.5 kg/m³ (150 PPB), 285 kg/m³ (100 PPB), 142.5 kg/m³ (50 PPB), 71.25 kg/m³ (25 PPB), 28.5 kg/m³ (10 PPB), 14.25 kg/m³ (5 PPB), 11.4 kg/m³ (4 PPB), 8.55 kg/m³ (3 PPB), 5.7 kg/m³ (2 PPB), 2.85 kg/m³ (1 PPB), or 1.43 kg/m³ (0.5 PPB) in the treatment fluid, where the amount may range from any lower limit to any upper limit and encompass any subset between the upper and lower limits. Some of the lower limits listed above are greater than some of the listed upper limits. One skilled in the art will recognize that the selected subset will require the selection of an upper limit in excess of the selected lower limit.

The methods and compositions of the present invention may be suitable for use in nearly all subterranean formations. In some embodiments, the subterranean formation may be a swelling or sloughing shale, a salt formation, a gypsum formation, an anhydrite formation, another evaporite formation, a hydrogen sulfide-containing formation, a hot (e.g., greater than 149°C (300°F)) formation, and/or a hard fracture rock formation.

Although primarily described in terms of lost circulation control for drilling fluids, the treatment method of the invention may be used in many different types of subterranean treatment operations. Such operations include, but are not limited to, drilling operations, lost circulation operations, stimulation operations, sand control operations, completion operations, acidizing operations, scale-inhibiting operations, water-blocking operations, clay-stabilizer operations, fracturing operations, frac-packing operations, gravel-packing operations, wellbore-strengthening operations, and sag-control operations. The methods of the invention may be used in full-scale operations or pills. As used herein, a "pill" is a type of relatively small volume of specially prepared treatment fluid placed or circulated in the wellbore.

In some embodiments, an additive may optionally be included in the base treatment fluid. Examples of such additives may include, but are not limited to, salts; weighting agents; inert solids; fluid loss control agents; emulsifiers; dispersion aids; corrosion inhibitors; emulsion thinners; emulsion thickeners; viscosifying agents; high-pressure, high-temperature emulsifier-filtration control agents; surfactants; particulates; proppants; lost circulation materials; pH control additives; foaming agents; breakers; biocides; crosslinkers; stabilizers; chelating agents; scale inhibitors; gases; mutual solvents; oxidizers; reducers; and any combination thereof. A person of ordinary skill in the art, with the benefit of this disclosure, will recognize when an additive should be included in the base treatment fluid, as well as an appropriate amount of said additive to include.

### REFERENCE EXAMPLES

The base drilling fluids tested in these reference examples are HYDROGUARD^{®} (an aqueous-based drilling fluid, available from Halliburton Energy Services, Inc. in Houston, TX), INNOVERT^{®} (an oil-based drilling fluid with an oil-base of mineral oil and alkanes, available from Halliburton Energy Services, Inc. in Houston, TX), and ACCOLADE^{®} (an oil-based drilling fluid with an oil-base of olefins and esters, available from Halliburton Energy Services, Inc. in Houston, TX). The mud weight for each system was 1.44 kg/L (12 PPG). Each mud was hot rolled at 93.3°C (200°F) for a period of 16 hours prior to testing.

The shear viscosity was measured using a FANN-35 SA Rheometer at 48.9°C (120°F).

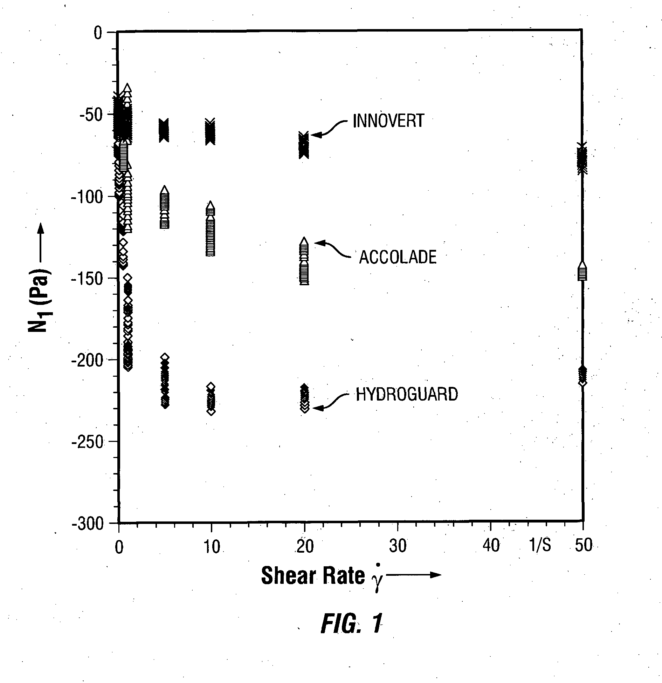

The first normal stress difference (**N₁**) was measured via rotational rheometry test using a MCR-301 Model Anton Paar Rheometer using PP-50 parallel plate geometry. The measurements were conducted at 25°C and atmospheric pressure with the gap between the plates set at 1 mm. About 2-3 mL of base drilling fluid was placed in the gap which was then subjected to shear rate ramp from 0.1 s⁻¹ to 50 s⁻¹. Fifty data points (shear stress and **N₁** values) were collected at each selected shear rate. The test duration was about one to three hours. Figure 1 shows **N₁** vs. shear rate.

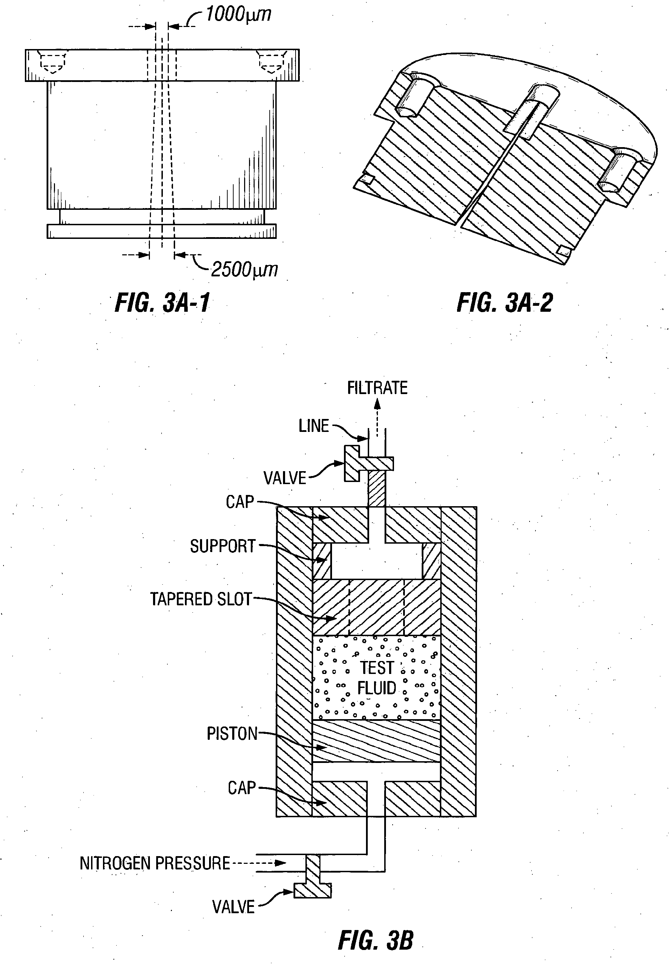

Lost circulation efficiency, or lost circulation control, was measured with a Particle Plugging Apparatus. The Particle Plugging Apparatus (Figure 3B) consists of a 500 mL volume cell that has a movable piston at the bottom. At the top, the cell has an assembly for sealing the filter media in while testing. The cell is positioned with pressure applied from the bottom of the cell and the filtrate collected from the top. This prevents other components of the drilling fluid that settle during the static period of the test from contributing to the performance of the particulate. The cell pressure is applied by a two-stage hydraulic pump or using a nitrogen pressure line. Pressure is transferred to the drilling fluid through the floating piston in the cell. The filter media that is employed in the particle plugging apparatus test as part of this test is the tapered slot (schematic in Figure 3A). The performance of the particulate is determined by the ability of the particulate to form an impermeable plug or bridge in the filtering media and to arrest the drilling fluid loss.

Lost circulation material of PANEX^{®}-35 (a tow weave carbon fiber, available from Zoltek Corporation in St. Louis, MO), ground marble with d(50) = 1200 µm, and resilient graphite carbon with d(50) = 1000 µm were added to a drilling fluid sample at a concentration of 1.4 kg/m³ (0.49 PPB), 142.5 kg/m³ (50 PPB), and 22.8 kg/m³ (8 PPB), respectively. 250 mL of the resultant sample was pressurized against a tapered slot where the opening of the slot tapers from one end to another over a fixed length physically resembling a fracture. Figure 3A provides a schematic representation of the tapered slot used with opening dimensions of 1000 µm and 2500 µm. Figure 3B provides a representation of the particle plugging apparatus used in these tests. The volume of fluid able to pass through the tapered slot before being plugged by the lost circulation material was measured.

*Example 1.* The rheological properties of the three drilling fluids were compared without a lost circulation material added. The shear viscosity for all three drilling fluids are similar. However, as shown in Figure 1, there are significant differences in the first normal stress difference (**N₁**) for the three drilling fluids at a shear rate greater than 5 s⁻¹.

*Example 2.* The drilling fluid loss control was measured for the three drilling fluids. Both HYDROGUARD^{®} and ACCOLADE^{®} provided similar fluid loss control of 15-20 mL while INNOVERT^{®} provided no drilling fluid loss control.

*Example 3.* The oil-to-water ratio was adjusted and viscosifiers were added to INNOVERT^{®} in an attempt to achieve higher |**N₁**| values and improve the drilling fluid loss control. No appreciable change in either measurement was observed.

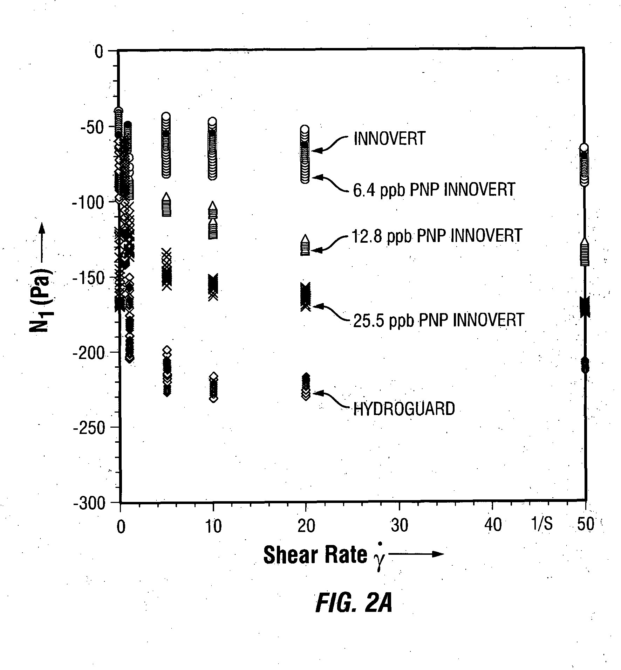

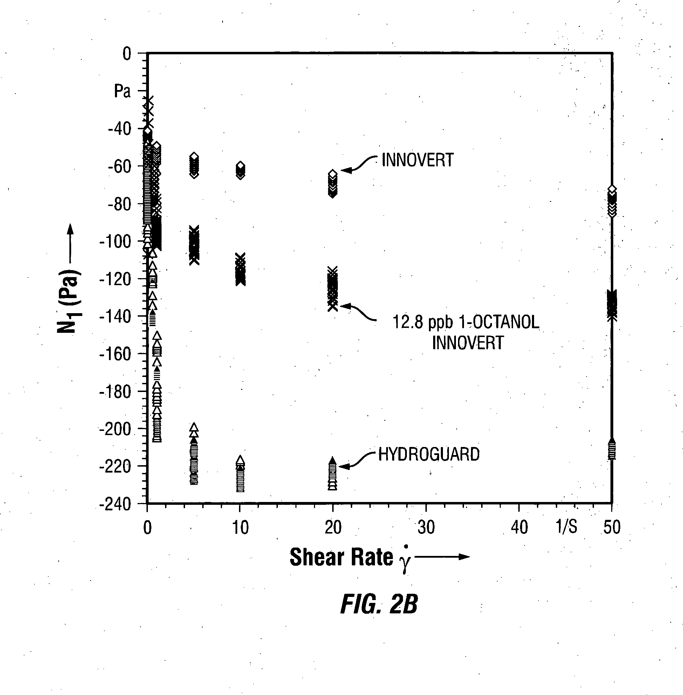

*Example 4.* Samples of INNOVERT^{®} were prepared with 18.2 kg/m³ (6.4 PPB), 36.5 kg/m³ (12.8 PPB), and 72.7 kg/m³ (25.5 PPB) of n-propoxy propanol and 36.5 kg/m³ (12.8 PPB) of 1-octanol. Figure 2 shows the first normal stress difference of the four samples as compared to INNOVERT^{®} and HYDROGUARD^{®}. With the addition of increasing amounts of polar organic molecules |**N₁**| of INNOVERT^{®} increased. Correspondingly, in drilling fluid loss control tests, no drilling fluid loss control is seen with INNOVERT^{®} or INNOVERT^{®} with 18.2 kg/m³ (6.4 PPB) of n-propoxy propanol. However, 30 mL, 20 mL and 20 mL of controlled drilling fluid loss was observed with 36.5 kg/m³ (12.8 PPB) of n-propoxy propanol, 72.7 kg/m³ (25.5 PPB) of n-propoxy propanol, and 36.5 kg/m³ (12.8 PPB) of 1-octanol added to INNOVERT^{®}, respectively.

While compositions and methods are described in terms of "comprising," "containing," or "including" various components or steps, the compositions and methods can also "consist essentially of or "consist of" the various components and steps. Moreover, the indefinite articles "a" or "an," as used in the claims, are defined herein to mean one or more than one of the elements that it introduces.

## Claims

1. A method comprising the steps of:
providing a drilling fluid comprising a lost circulation material and a base drilling fluid; and
drilling a portion of a wellbore in a subterranean formation using the drilling fluid;
wherein the base drilling fluid comprises an oleaginous continuous phase and one or more polar organic compounds selected from a thiol, a sulfoxide, pyrrole, pyridine and furan; and
wherein the base drilling fluid has an absolute first normal stress difference (|N₁|) greater than 100 Pa, N₁ being measured by rotational rheometry using a parallel plate geometry at 25°C, 1 atm and a plate gap of 1 mm, and the |N₁| value of greater than 100 Pa applying to shear rates greater than 5 s⁻¹.

2. The method of Claim 1, wherein the lost circulation material is placed in a void in the subterranean formation.

3. The method of Claim 1, wherein the polar organic compound(s) is/are contained in the base drilling fluid in a total amount of 0.01% to 100% by volume based on the volume of the oleaginous continuous phase.

4. The method of Claim 1, wherein the base drilling fluid further comprises one or more additives selected from a salt; a weighting agent; an inert solid; a fluid loss control agent; an emulsifier: a dispersion aid; a corrosion inhibitor; an emulsion thinner; an emulsion thickener; a viscosifying agent; a high-pressure, high-temperature emulsifier-filtration control agent; a surfactant; a particulate; a proppant; a lost circulation material; a pH control additive; a foaming agent; a breaker; a biocide; a crosslinker; a stabilizer; a chelating agent; a scale inhibitor; a gas; a mutual solvent; an oxidizer; and a reducer.

5. A method comprising the steps of:
introducing a treatment fluid comprising a lost circulation material and a base treatment fluid into a wellbore penetrating a subterranean formation; and
allowing the lost circulation material to fill a void in the subterranean formation, thereby reducing the flow of the treatment fluid or a subsequent fluid into at least a portion of the subterranean formation neighboring the void;
wherein the base treatment fluid comprises an oleaginous continuous phase and one or more polar organic compounds selected from a thiol, a sulfoxide, pyrrole, pyridine and furan; and
wherein the base treatment fluid has a |N₁| value greater than 100 Pa, N₁ being measured by the method defined in Claim 1.

6. The method of Claim 1 or Claim 5, wherein the lost circulation material comprises a fiber and/or a particulate.

7. A method comprising the steps of:
providing a base drilling fluid comprising an oleaginous continuous phase; and
adding one or more polar organic compounds to the base drilling fluid in a concentration sufficient to increase the |N₁| value of the base drilling fluid to greater than 100 Pa, thereby forming a drilling fluid;
wherein the polar organic compound(s) is/are selected from a thiol, a sulfoxide, pyrrole, pyridine and furan; and
wherein N₁ is measured using the method defined in Claim 1.

8. The method of Claim 7, further comprising the step of introducing the drilling fluid into a wellbore penetrating a subterranean formation.

9. The method of Claim 7, further comprising the step of adding a lost circulation material to the base drilling fluid, wherein the lost circulation material comprises a fiber and/or a particulate.

10. The method of any of Claims 1, 5 and 7, wherein the base drilling/treatment fluid is an invert emulsion comprising the oleaginous continuous phase and an aqueous discontinuous phase.

11. The method of any of Claims 1, 5 and 7, wherein the oleaginous continuous phase comprises a fluid selected from an alkane, an olefin, an aromatic organic compound, a cyclic alkane, a paraffin, a diesel fluid, a mineral oil, a desulfurized hydrogenated kerosene, and any combination thereof.

12. A treatment fluid comprising:
a lost circulation material; and
a base treatment fluid comprising an oleaginous continuous phase and one or more polar organic compounds selected from a thiol, a sulfoxide, pyrrole, pyridine and furan;
wherein the concentration of the polar organic compound(s) is such that the base treatment fluid has a |N₁| value greater than 100 Pa, N₁ being measured by the method defined in Claim 1.

## Patentansprüche

1. Verfahren, umfassend die Schritte:
Bereitstellen eines Bohrfluids, umfassend ein verlorengegangenes Zirkulationsmaterial und ein Basis-Bohrfluid; und
Bohren eines Teils eines Bohrlochs in einer subterranen Formation unter Verwendung des Bohrfluids;
worin das Basis-Bohrfluid eine ölige kontinuierliche Phase und eine oder mehrere polare organische Verbindungen umfasst, ausgewählt aus einem Thiol, einem Sulfoxid, Pyrrol, Pyridin und Furan; und
worin das Basis-Bohrfluid eine absolute erste Normalspannungsdifferenz (|N₁|) von größer als 100 Pa aufweist, worin N₁ durch Rotationsrheometrie unter Verwendung einer parallelen Plattengeometrie bei 25°C, 1 Atm und einem Plattenabstand von 1 mm gemessen wird, und der |N₁| -wert von größer als 100 Pa auf Scherraten von größer als 5 s⁻¹ zutrifft.

2. Verfahren gemäß Anspruch 1, worin das verlorengegangene Zirkulationsmaterial in einem Hohlraum in der subterranen Formation platziert ist.

3. Verfahren gemäß Anspruch 1, worin die polare(n) organische(n) Verbindung(en) in dem Basis-Bohrfluid in einer Gesamtmenge von 0,01 bis 100 Vol.% enthalten ist/sind, bezogen auf das Volumen der öligen kontinuierlichen Phase.

4. Verfahren gemäß Anspruch 1, worin das Basis-Bohrfluid ferner ein oder mehr Additive umfasst, ausgewählt aus einem Salz; einem Ballastmittel; einem inerten Feststoff; einem Flüssigkeitsverlust-Kontrollmittel, einem Emulgator; einem Dispersionshilfsstoff; einem Korrosionsinhibitor; einem Emulsionsverdünner; einem Emulsionsverdicker; einem Viskositäts-modifizierenden Mittel; einem Hochdruck-, Hochtemperatur-Emulgier-Filtrationskontrollmittel; einem Tensid; einem teilchenförmigen Stoff; einem spaltenfüllenden Material; einem verlorengegangenen Zirkulationsmaterial; einem pH-Kontrolladditiv; einem Schäummittel; einem Trennmittel; einem Biozid; einem Vernetzungsmittel; einem Stabilisator; einem Chelatbildner; einem Kesselstein-Inhibitor; einem Gas; einem wechselseitigen Lösungsmittel; einem Oxidationsmittel; und einem Reduktionsmittel.

5. Verfahren, umfassend die Schritte:
Einfüllen eines Behandlungsfluids, das ein verlorengegangenes Zirkulationsmaterial und ein Basis-Behandlungsfluid umfasst, in ein Bohrloch, das eine subterrane Formation penetriert; und
Ermöglichen, dass das verlorengegangene Zirkulationsmaterial einen Hohlraum in der subterranen Formation füllt, wodurch der Fluss des Behandlungsfluids oder eines anschließenden Fluids in zumindest einen Teil der subterranen Formation, die zu dem Hohlraum benachbart ist, verringert wird;
worin das Basis-Behandlungsfluid eine ölige kontinuierliche Phase und eine oder mehrere polare organische Verbindung(en) umfasst, ausgewählt aus einem Thiol, einem Sulfoxid, Pyrrol, Pyridin und Furan; und worin das Basis-Behandlungsfluid einen |N₁| -Wert von größer als 100 Pa aufweist, worin N₁ mit dem Verfahren, welches in Anspruch 1 definiert ist, gemessen wird.

6. Verfahren gemäß Anspruch 1 oder Anspruch 5, worin das verlorengegangene Zirkulationsmaterial einen Faser- und/oder Partikel-förmigen Stoff umfasst.

7. Verfahren, umfassend die Schritte:
Bereitstellen eines Basis-Bohrfluids, das eine ölige kontinuierliche Phase umfasst; und
Zugeben von einer oder mehreren polaren organischen Verbindung(en) zu dem Basis-Bohrfluid in einer Konzentration, die hinreichend ist, um den |N₁| -Wert des Basis-Bohrfluids auf größer als 100 Pa zu erhöhen, wodurch ein Bohrfluid gebildet wird;
worin die polare(n) organische(n) Verbindung(en) aus einem Thiol, einem Sulfoxid, Pyrrol, Pyridin und Furan ausgewählt ist/sind; und
worin N₁ unter Verwendung des in Anspruch 1 definierten Verfahrens gemessen wird.

8. Verfahren gemäß Anspruch 7, ferner umfassend einen Schritt zum Einführen des Bohrfluids in ein Bohrloch, das eine subterrane Formation penetriert.

9. Verfahren gemäß Anspruch 7, ferner umfassend den Schritt des Zugebens eines verlorengegangenen Zirkulationsmaterials zu dem Basis-Bohrfluid, worin das verlorengegangene Zirkulationsmaterial einen Faser- und/einen Partikel-förmigen Stoff umfasst.

10. Verfahren gemäß irgendeinem der Ansprüche 1, 5 und 7, worin das Basis-Bohr-/Behandlungs-Fluid eine Invertemulsion ist, die die ölige kontinuierliche Phase und eine wässrige diskontinuierliche Phase umfasst.

11. Verfahren gemäß irgendeinem der Ansprüche 1, 5 und 7, worin die ölige kontinuierliche Phase ein Fluid umfasst, das ausgewählt ist aus einem Alkan, einem Olefin, einer aromatischen organischen Verbindung, einem cyclischen Alkan, einem Paraffin, einem Diesel-Fluid, einem Mineralöl, einem entschwefelten hydrierten Kerosin und jeglicher Kombination hiervon.

12. Behandlungsfluid, umfassend:
ein verlorengegangenes Zirkulationsmaterial; und
ein Basis-Behandlungsfluid, das eine ölige kontinuierliche Phase und ein oder mehrere polare organische Verbindung(en) umfasst, ausgewählt aus einem Thiol, einem Sulfoxid, Pyrrol, Pyridin und Furan;
worin die Konzentration der polaren organischen Verbindung(en) so ist, dass das Basis-Behandlungsfluid einen |N₁| Wert von größer als 100 Pa aufweist, worin N₁ mit dem in Anspruch 1 definierten Verfahren gemessen wird.

## Revendications

1. Procédé comprenant les étapes qui consistent :
à fournir un fluide de forage comprenant un matériau de perte de circulation et un fluide de forage de base ; et
à forer une partie d'un puits de forage dans une formation souterraine en utilisant le fluide de forage ;
dans lequel le fluide de forage de base comprend une phase continue oléagineuse et un ou plusieurs composé(s) organique(s) polaire(s) choisi(s) parmi un thiol, un sulfoxyde, du pyrrole, de la pyridine et du furane ; et
dans lequel le fluide de forage de base a une première valeur absolue de différence de contrainte normale (|N₁|) supérieure à 100 Pa, N₁ étant mesurée par rhéométrie rotationnelle en utilisant une géométrie à plaques parallèles à 25°C, 1 atm et un espace inter-plaques de 1 mm et la valeur |N₁| supérieure à 100 Pa s'appliquant à des taux de cisaillement supérieurs à 5 s⁻¹.

2. Procédé de la revendication 1, dans lequel le matériau de perte de circulation est placé dans une cavité dans la formation souterraine.

3. Procédé de la revendication 1, dans lequel le(s) composé(s) organique(s) polaire(s) est/sont présent(s) dans le fluide de forage de base en une quantité totale allant de 0,01% à 100% en volume par rapport au volume de la phase continue oléagineuse.

4. Procédé de la revendication 1, dans lequel le fluide de forage de base comprend en outre un ou plusieurs additif(s) choisi(s) parmi un sel ; un agent alourdissant ; un solide inerte ; un agent de régulation de perte de fluide ; un émulsifiant ; un adjuvant de dispersion ; un inhibiteur de corrosion ; un diluant en émulsion ; un épaississant en émulsion ; un agent améliorant la viscosité ; un agent de régulation de filtration d'émulsifiant à haute pression et à haute température ; un tensioactif ; une matière particulaire ; un agent de soutènement ; un matériau de perte de circulation ; un additif de réglage du pH ; un agent moussant ; un agent de rupture ; un biocide ; un agent de réticulation ; un stabilisant ; un agent chélatant ; un antitartre ; un gaz ; un co-solvant ; un oxydant ; et un réducteur.

5. Procédé comprenant les étapes qui consistent :
à introduire un fluide de traitement comprenant un matériau de perte de circulation et un fluide de traitement de base dans un puits de forage pénétrant dans une formation souterraine ; et
à permettre au matériau de perte de circulation de remplir une cavité dans la formation souterraine, ce qui réduit l'écoulement du fluide de traitement ou d'un fluide ultérieur dans au moins une partie de la formation souterraine voisine du vide ;
dans lequel le fluide de traitement de base comprend une phase continue oléagineuse et un ou plusieurs composé(s) organique(s) polaire(s) choisi(s) parmi un thiol, un sulfoxyde, du pyrrole, de la pyridine et du furane ; et
dans lequel le fluide de traitement de base a une valeur |N₁| supérieure à 100 Pa, N₁ étant mesurée par le procédé défini dans la revendication 1.

6. Procédé de la revendication 1 ou 5, dans lequel le matériau de perte de circulation comprend une fibre et/ou une matière particulaire.

7. Procédé comprenant les étapes qui consistent :
à fournir un fluide de forage de base comprenant une phase continue oléagineuse ; et
à ajouter un ou plusieurs composé(s) organique(s) polaire(s) au fluide de forage de base en une concentration suffisante pour augmenter la valeur |N₁| du fluide de forage de base de manière à être supérieure à 100 Pa, formant ainsi un fluide de forage ;
dans lequel le(s) composé(s) organique(s) polaire(s) est/sont choisi(s) parmi un thiol, un sulfoxyde, du pyrrole, de la pyridine et du furane ; et
dans lequel N₁ est mesurée en utilisant le procédé défini dans la revendication 1.

8. Procédé de la revendication 7, comprenant en outre l'étape qui consiste à introduire le fluide de forage dans un puits de forage pénétrant dans une formation souterraine.

9. Procédé de la revendication 7, comprenant en outre l'étape qui consiste à ajouter un matériau de perte de circulation au fluide de forage de base, où le matériau de perte de circulation comprend une fibre et/ou une matière particulaire.

10. Procédé de l'une des revendications 1, 5 et 7, dans lequel le fluide de traitement/forage de base est une émulsion inverse comprenant la phase continue oléagineuse et une phase aqueuse discontinue.

11. Procédé de l'une des revendications 1, 5 et 7, dans lequel la phase continue oléagineuse comprend un fluide choisi parmi un alcane, une oléfine, un composé aromatique organique, un alcane cyclique, une paraffine, un fluide diesel, une huile minérale, un kérosène hydrogéné désulfuré et une combinaison quelconque de ceux-ci.

12. Fluide de traitement comprenant :
un matériau de perte de circulation ; et
un fluide de traitement de base comprenant une phase continue oléagineuse et un ou plusieurs composé(s) organique(s) polaire(s) choisi(s) parmi un thiol, un sulfoxyde, du pyrrole, de la pyridine et du furane ;
dans lequel la concentration du/des composé(s) organique(s) polaire(s) est telle que le fluide de traitement de base a une valeur |N₁| supérieure à 100 Pa, N₁ étant mesurée par le procédé défini dans la revendication 1.
